# DEMANDE DE BREVET EUROPEEN

(11) **EP 0 848 275 A1**
(43) Date de publication de la demande: **17.06.1998**
(21) Numéro de dépôt: 97480079.9
(22) Date de dépôt: 21.11.1997
(51) Int. Cl.: G02C 3/00

(54) **Dispositif pour tenir les lunettes sans appui ni contact ni sur le nez ni sur le visage**

(30) Priorité: 05.12.1996 FR 9615177
(71) Demandeur: Oppedisano, Giuseppe, 06000 Nice (FR); Maccelli, Federica, 50047 Prato (IT)
(72) Inventeur: Oppedisano, Giuseppe, 06000 Nice (FR); Maccelli, Federica, 50047 Prato (IT)

(57) **Abrégé**

L'invention concerne un dispositif permettant de tenir les lunettes sans appui ni contact ni sur le nez ni sur une autre partie du visage. Il est constitué d'un système de suspension et appui comprenant:les branches (1) à contact de la zone temporale supérieure, les prologements (2) des branches (1) à contact de l'occiput sur la partie postérieure de la tête et, sur chaque branche (1), une saillie (3) d'appui qui se trouve en contact avec la zone temporale immédiatement antérieure à l'oreille. Les branches (1) avec leurs prolongements (2) peuvent constituer un unique élément en forme de 'U' qui entoure entièrement la zone postérieure de la tête.

Le dispositif selon l'invention est particulièrement destiné à maintenir les lunettes sans appui ni contact sur le visage.

## Description

La présente invention concerne un dispositif pour tenir les lunettes sans appui ni contact ni sur le nez ni sur le visage.

La stabilité des lunettes est traditionellement effectuée à l'aide d'une arcade qui appuie sur le nez, ce qui cause plusieurs ennuis: les lunettes glissent en avant et pèsent sur le nez.

Le dispositif selon l'invention permet de remédier à ces inconvénients. Il comporte en effet selon une première caractéristique, un ensemble de lentilles -de vue ou de soleil- leur monture et un système de suspension et appui, que constituent des lunettes dont la stabilité est garantie par ce système de suspension. Ce dernier comprend: les branches à contact de la zone temporale supérieure, les prolongements des branches à contact de l'occiput sur la partie postérieure de la tête et, sur chaque branche une saillie d'appui qui se trouve au contact de la zone temporale immédiatement antérieure à l'oreille.

Le système de suspension agit sur les points suivants:
- sous la partie occipitale médiante les prolongements;
- sur les oreilles;
- sur la zone temporale antérieure aux oreilles et latéralement avec les branches.

Le mouvement en avant et en arrière est empêché par les saillies et les prolongements des branches. Le mouvement vers la droite et vers la gauche est empêché par les branches laterales. La rotation vers le bas est empêché par les prolongements et l'appui des branches sur les oreilles et par les saillies.

Comme résultat, les lunettes ont une très bonne stabilité bien qu'ils n' aient aucun contact ni sur le nez ni sur le visage.

Avec ce dispositif les lunettes apportent un meilleur confort. En effet:
- le visage est libre de tout contact,
- les lunettes ne glissent plus ni en avant ni en arrière:
   pas en avant parce que les branches, en arrivant jusqu'à l'occiput derrière la tête, les bloquent,
   pas en arrière c'est à dire sur le visage parce que les saillies empêchent ce mouvement.

Selon des modes particulières de réalisation:
- les prolongements des branches peuvent constituer un unique élément en forme de 'U' qui entoure entièrement la zone postérieure de la tête.
- Les prolongements constituant un unique élément en forme de 'U' peuvent comporter l'absence de l'arcade qui réunit les lentilles.
- Les branches peuvent être prévues avec un mécanisme de glissement et blocage qui règle la position des saillies sur les branches et la longueur des branches mêmes.
- Les saillies dépassant inférieurement chaque branche peuvent être fixés ou faire partie intégrante des branches.
- Les saillies peuvent être constitués d'un pliage des branches.
- Les saillies constitués d'un pliage des branches peuvent comporter que les branches mêmes descendent le long de la zone temporale antérieure et continuent jusqu'à se lier aux lentilles.
- Les matériaux utilisés peuvent être prévues à memoire de forme.

Les dessins annexés illustrent l'invention:
La figure 1 représente le dispositif de l'invention;
La figure 2 représente une variante de ce dispositif.

En référence à ces dessins, le dispositif comporte des branches (1), les prolongements (2) des branches (1) et, sur chaque branche (1) une saillie (3) d'appui. Les lentilles sont réunies avec une arcade (4).

Les saillies (3) dépassent inférieurement chaque branche (1) auxquelles elles sont fixées ou desquelles elles font partie.

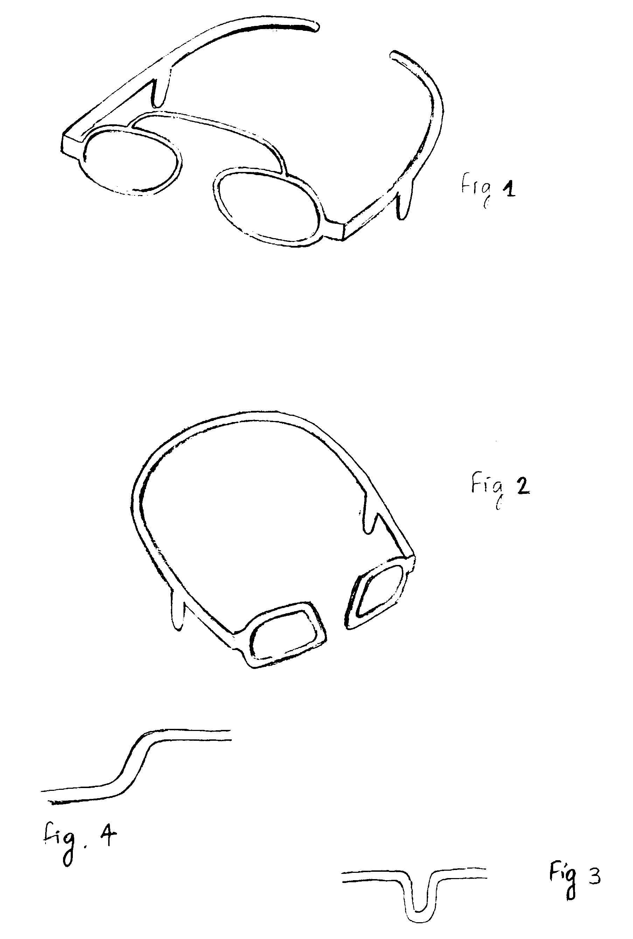

Dans la forme de réalisation selon la figure 2, les prolongements (2) des branches (1) constituent un unique élément en forme de 'U' qui entoure entièrement la partie postérieure de la tête. Dans ce cas les lunettes peuvent comporter l'absence de l'arcade (4) qui réunit les lentilles.

Selon une variante non illustrée, les branches (1) peuvent être prévues avec un mécanisme de glissement et blocage qui règle la position des saillies (3) et la longueur des branches (1).

La figure 3 représente une variante des saillies (3) qui comporte un pliage des branches (1).

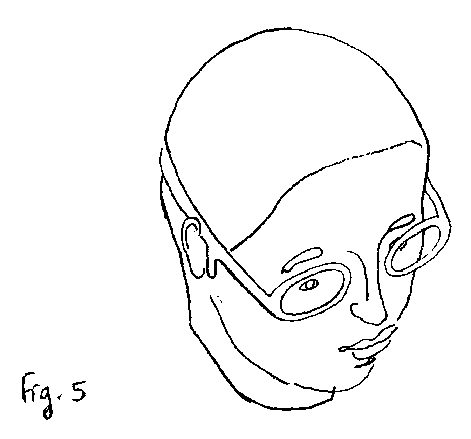

La figure 4 représente une variante des saillies (3) constitués d'un pliage des branches (1) qui comporte les branches (1) qui descendent le long de la zone temporale antérieure et continuent jusqu'à se lier aux lentilles.

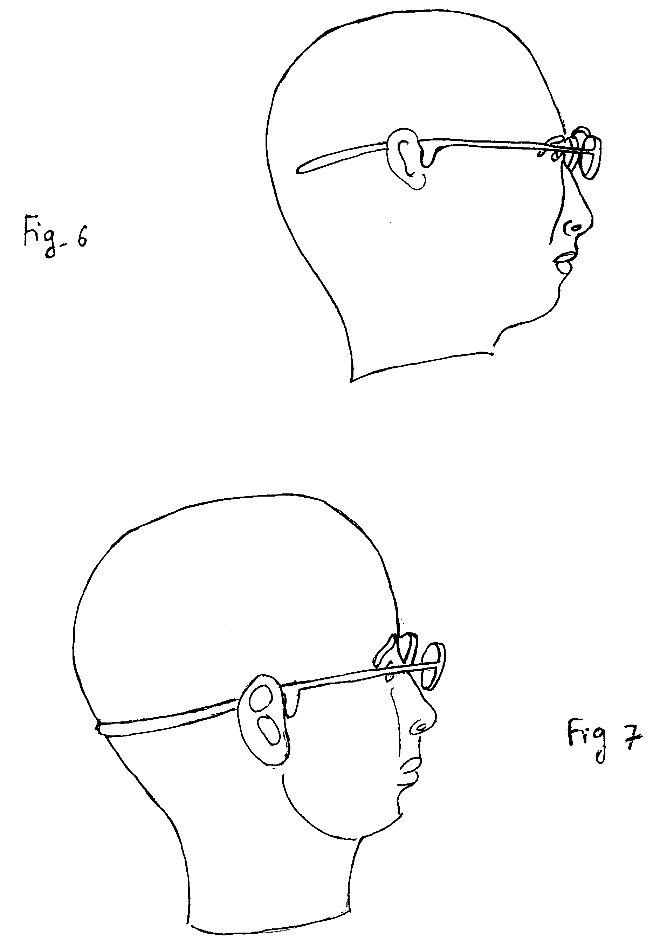

-Les figures 5 , 6 et 7 représentent les lunettes portées par un modèle.

Le dispositif selon l'invention est particulièrement destiné à maintenir les lunettes sans appui ni contact sur le visage.

## Revendications

1. Dispositif pour lunettes de vue ou de soleil caractérisé en ce qu'ils sont constituées par branches (1), prolongements (2) des branches (1) et saillies (3) des branches (1) constituant un système de suspension et appui qui garantie la stabilité des lunettes sans appui et sans contact ni sur le nez ni sur le visage.

2. Dispositif selon la révendication 1 caractérisé en ce que le système de suspension et appui comprend: les branches (1) à contact de la zone temporale supérieure, les prolongements (2) des branches (1) à contact de l'occiput sur la partie postérieure de la tête, et sur chaque branche (1) une saillie (3) d'appui qui se trouve au contact de la zone temporale immédiatement antérieure à l'oreille.

3. Dispositif selon les révendications 1 et 2, caractérisé en ce qui concerne les prolongements (2) des branches (1) constitue un unique élément en forme de 'U' qui entoure entièrement la zone occipitale postérieure de la tête.

4. Dispositif selon la révendication 3, caractérisé en ce que les lentilles ne sont pas réunies avec une arcade (4).

5. Dispositif selon la révendication 1, caractérisé en ce qu' il importe un mécanisme de glissement et blocage qui règle la position des saillies (3) sur les branches (1) et la longueur des branches (1) mêmes.

6. Dispositif selon la révendication 2 caractérisé en ce que les saillies (3) dépassent inférieurement chaque branche (1) auxquelles elles peuvent être fixées ou en faire partie intégrante.

7. Dispositif selon la révendication 2 caractérisé en ce que les saillies (3) sont constitués d'un pliage des branches (1).

8. Dispositif selon la révendication 7 caractérisé en ce que les branches (1) descendent le long de la zone temporale antérieure en formant une saillie (3) d'appui et continuent jusqu'à se lier aux lentilles.

9. Dispositif selon la révendication 2 caractérisé en ce que les matériaux utilisés peuvent être à memoire de forme.
